# EUROPEAN PATENT APPLICATION

(11) **EP 4 686 048 A1**
(43) Date of publication of application: **28.01.2026**
(21) Application number: 25186849.3
(22) Date of filing: 02.07.2025
(51) Int. Cl.: H02K 3/52, H02K 11/25

(54) **POWER TOOL AND ELECTRIC MOTOR**

(30) Priority: 25.07.2024 CN 202421784308 U
(71) Applicant: Nanjing Chervon Industry Co., Ltd., Nanjing, Jiangsu 211106 (CN)
(72) Inventor: GUO, Hongjian, Nanjing, Jiangsu 211106 (CN)
(74) Representative: Sun, Yiming

(57) **Abstract**

A power tool includes an electric motor, a transmission mechanism, and a temperature sensor. The electric motor includes a stator and a rotor. The stator includes a stator lamination, an insulating end cover, and coils. The insulating end cover includes an end cover body and multiple wound teeth. The temperature sensor is placed on a first tooth surface of any wound tooth. The first tooth surface is a plane substantially perpendicular to a rotating shaft of the rotor. The temperature sensor is disposed on the wound tooth and the thermal conduction path between a coil and the temperature sensor is removed so that the temperature sensor is in direct contact with the coil. Thus, a temperature change of the electric motor can be sensed in time, and the electric motor is protected in time. In addition, the influence of an external environment on the temperature sensor is eliminated, and the electric motor is accurately protected. In addition, the temperature sensor is directly disposed on the wound tooth in advance, then the coil is wound on the wound tooth to wrap and fix the temperature sensor, and an additional temperature sensor fixing structure is not required. Thus, parts are reduced, and the cost is low.

## Description

### TECHNICAL FIELD

The present application relates to a power tool and, in particular, to a power tool and an electric motor.

### BACKGROUND

An angle grinder is a multi-functional cutting tool for grinding, cutting, derusting, polishing, weld bead grinding, weld root cleaning, and the like of a metal component. The angle grinder grinds, cuts, derusts, or polishes the metal component by using a sheet working accessory, a rubber working accessory, a wire wheel, or the like that rotates at a high speed. The angle grinder has the advantages of convenient use, a high rotational speed, a high cutting speed, and rapid weld bead grinding.

A brushless motor and an electronic controller are excessively sensitive to a current. Therefore, the electric motor/the electronic controller is conventionally protected through overcurrent protection. However, this method affects a hand feel during heavy-load operation. At present, this problem is solved through constant-current control performed by the electronic controller. However, when an external load continues to rise, the rotational speed is significantly reduced due to input power limitation. In this case, the entire machine is poorly cooled. To further protect the electric motor, a negative-temperature-coefficient (NTC) thermistor is added to the electric motor to monitor a temperature rise of the electric motor and prevent the electric motor from failing due to an excessively high temperature rise.

In the related art, the NTC thermistor is added to the outer surface of an iron core for protection. However, the defects are as follows: (1) the thermal conduction path of a heating winding is excessively long, and the protection is not timely; (2) the NTC thermistor is greatly affected by an external temperature, where when the external ambient temperature is excessively high, hot air is blown to the NTC thermistor, and as a result, the machine is prone to enter a temperature protection state in advance and the performance of the entire machine is affected.

This part provides background information related to the present application, and the background information is not necessarily the existing art.

### SUMMARY

An object of the present application is to solve or at least alleviate part or all of the preceding problems. Therefore, an object of the present application is to provide a power tool and an electric motor.

To achieve the preceding object, the present application adopts the technical solutions below.

A power tool includes: an electric motor including a stator and a rotor; a transmission mechanism configured to transmit a drive force generated by rotation of the rotor to drive a working component to work; and a temperature sensor configured to detect a temperature of the electric motor. The stator includes a stator lamination, an insulating end cover disposed at two ends of the stator lamination, and coils wound on the stator lamination and the insulating end cover. The insulating end cover includes an end cover body and multiple wound teeth. The temperature sensor is placed on a first tooth surface of any wound tooth. The first tooth surface is a plane substantially perpendicular to a rotating shaft of the rotor.

In some examples, each of the multiple wound teeth includes a tooth body and a tooth tip portion, and the tooth tip portion is in a flange shape relative to the tooth body, where a surface of the tooth body substantially perpendicular to the rotating shaft is configured as the first tooth surface.

In some examples, the insulating end cover further includes an enclosure portion, and the enclosure portion is provided with an avoidance portion to avoid a lead-out wire of the temperature sensor.

In some examples, the avoidance portion is configured as a hole-like structure on the enclosure portion.

In some examples, a fixing coating is applied between the temperature sensor and the first tooth surface to fix the temperature sensor on the first tooth surface.

In some examples, the fixing coating includes a fixing adhesive.

In some examples, the temperature sensor directly abuts against a coil wound on the wound tooth.

A power tool includes: an electric motor including a stator and a rotor; a transmission mechanism configured to transmit a drive force generated by rotation of the rotor to drive a working component to work; and a temperature sensor configured to detect a temperature of the electric motor. The stator includes a stator lamination, an insulating end cover disposed at two ends of the stator lamination, and coils wound on the stator lamination and the insulating end cover. The insulating end cover includes an end cover body and multiple wound teeth. The temperature sensor is placed on any wound tooth. The multiple wound teeth have the same structure.

In some examples, the insulating end cover further includes an enclosure portion, and the enclosure portion is provided with an avoidance portion to avoid a lead-out wire of the temperature sensor.

In some examples, the avoidance portion is configured as a hole-like structure on the enclosure portion.

In some examples, a fixing coating is applied between the temperature sensor and a tooth surface of the wound tooth on which the temperature sensor is placed, so as to fix the temperature sensor on the tooth surface for the temperature sensor.

In some examples, the fixing coating includes a fixing adhesive.

In some examples, the temperature sensor directly abuts against a coil wound on the wound tooth.

An electric motor includes a stator and a rotor. The stator includes a stator lamination, an insulating end cover disposed at two ends of the stator lamination, and coils wound on the stator lamination and the insulating end cover. The insulating end cover includes an end cover body and multiple wound teeth. The electric motor further includes a temperature sensor. The temperature sensor is placed on a first tooth surface of any wound tooth. A first tooth surface of each of the multiple wound teeth is configured as a plane.

In some examples, the first tooth surface is a plane.

In some examples, each of the multiple wound teeth includes a tooth body and a tooth tip portion, and the tooth tip portion is in a flange shape relative to the tooth body, where a surface of the tooth body substantially perpendicular to the rotating shaft is configured as the first tooth surface.

In some examples, the insulating end cover further includes an enclosure portion, and the enclosure portion is provided with an avoidance portion to avoid a lead-out wire of the temperature sensor.

In some examples, the avoidance portion is configured as a hole-like structure on the enclosure portion.

In some examples, a fixing coating is applied between the temperature sensor and the first tooth surface to fix the temperature sensor on the first tooth surface.

In some examples, the fixing coating includes a fixing adhesive.

The present application has the following benefits.

The present application provides the power tool. The temperature sensor is disposed on the wound tooth and the thermal conduction path between the coil and the temperature sensor is removed so that the temperature sensor can be in direct contact with the coil. Thus, a temperature change of the electric motor can be sensed in time, and the electric motor is protected in time. In addition, the influence of an external environment on the temperature sensor is eliminated, and the electric motor is accurately protected. In addition, the temperature sensor is directly disposed on the wound tooth in advance, then the coil is wound on the wound tooth to wrap and fix the temperature sensor, and an additional temperature sensor fixing structure is not required. Thus, parts are reduced, and the cost is low.

### BRIEF DESCRIPTION OF DRAWINGS

FIG. 1 is a schematic diagram of a power tool according to an example of the present application.
FIG. 2 is a structural view of an electric motor involved in an example of the present application.
FIG. 3 is a structural view of an electric motor involved in an example of the present application with a rotor and a first coil hidden.
FIG. 4 is a top view of a stator involved in an example of the present application.
FIG. 5 is a sectional view of an electric motor involved in an example of the present application with a rotor hidden.
FIG. 6 is a structural view of an insulating end cover involved in an example of the present application.
FIG. 7 is an exploded view showing an insulating end cover and a stator lamination involved in an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

In this example, an electric motor is applicable to various types of power tools. For example, a power tool may be a riding mower, an electric drill, a chainsaw, a string trimmer, or a blower. The power tool may be a handheld power tool, for example, a drill, a hedge trimmer, or a sander. Alternatively, the power tool may be a table tool, for example, a table saw or a miter saw. Alternatively, the power tool may be a push power tool, for example, a push mower or a push snow thrower. Alternatively, the power tool may be a riding power tool, for example, a riding mower, a riding vehicle, or an all-terrain vehicle. Alternatively, the power tool may be a robotic tool, for example, a robotic mower or a robotic snow thrower. In some examples, the power tool may be an electric drill, an electric lamp, an electric vehicle, or the like. In some examples, the power tool may be a garden tool, for example, a hedge trimmer, a blower, a mower, or a chainsaw. Alternatively, the power tool may be a decorating tool, for example, a screwdriver, a nail gun, a circular saw, or a sander. In some examples, the power tool may be a vegetation care tool, for example, a string trimmer, a mower, a hedge trimmer, or a chainsaw. Alternatively, the power tool may be a cleaning tool, for example, a blower, a snow thrower, or a cleaning machine. Alternatively, the power tool may be a drilling tool, for example, a drill, a screwdriver, a wrench, or an electric hammer. Alternatively, the power tool may be a sawing tool, for example, a reciprocating saw, a jigsaw, or a circular saw. Alternatively, the power tool may be a table tool, for example, a table saw, a miter saw, a metal cutter, or an electric router. Alternatively, the power tool may be a sanding tool, for example, an angle grinder or a sander. Alternatively, the power tool may be another tool, for example, a fan.

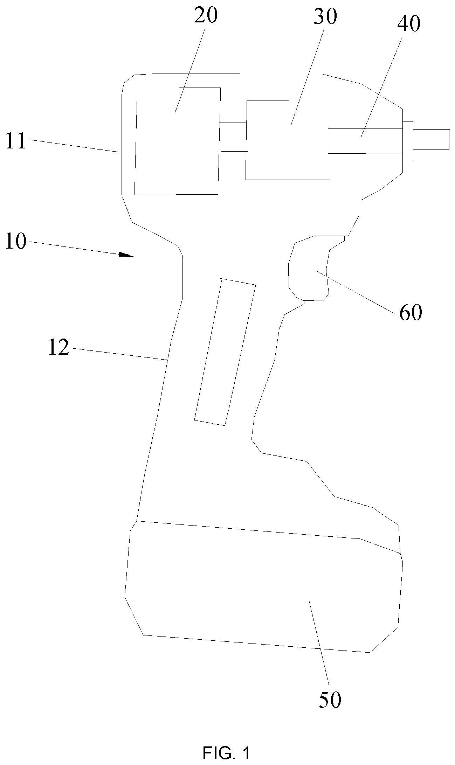

In an example, a handheld power tool shown in FIG. 1 is used as an example, and the power tool includes a housing 10, an electric motor 20, an output shaft 40, a transmission mechanism 30, and a mounting device. The electric motor 20 is disposed in the housing 10. The electric motor 20 includes or is connected to a motor shaft so that the electric motor 20 outputs power. The transmission mechanism 30 is connected to the motor shaft and the output shaft 40 such that the electric motor 20 drives the motor shaft to rotate and the motor shaft drives, through the transmission mechanism 30, the output shaft 40 to rotate about a first axis. The mounting device is used for mounting a working accessory to the output shaft 40 so that the output shaft 40 can drive the working accessory to rotate.

The housing 10 includes a head housing 11 and a grip 12. The head housing 11 is connected to the grip 12 and is preferably configured to be perpendicular or approximately perpendicular to the grip 12. The electric motor 20 and the transmission mechanism 30 are disposed in the head housing 11. Part of the output shaft 40 is disposed in the head housing 11. The motor shaft and the output shaft 40 are coaxially disposed and connected to each other through the transmission mechanism 30. When the motor shaft rotates, the transmission mechanism 30 drives the output shaft 40 to rotate, and then the output shaft 40 drives the working accessory to rotate.

The power tool further includes a power supply configured to power the power tool. In this example, the power supply is a battery pack 50. The battery pack 50 cooperates with a corresponding power supply circuit to power the power tool. In some examples, a battery pack coupling portion is formed on the housing 10. The battery pack coupling portion is used for mounting the battery pack 50, and the battery pack 50 is detachably connected to the battery pack coupling portion.

The grip 12 is connected to a control switch 60 for a user to operate. An operating state of the power tool can be controlled through the control switch 60.

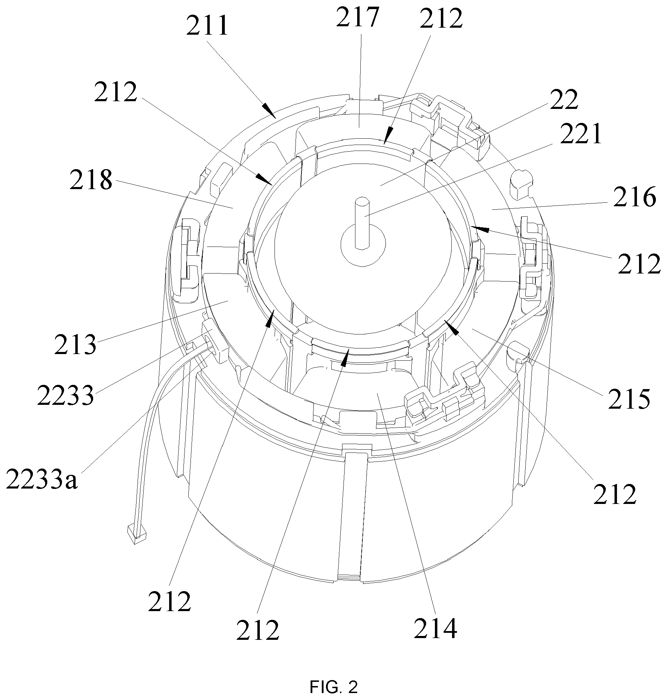

The structure of the electric motor 20 is described in detail below with reference to FIGS. 2 to 7.

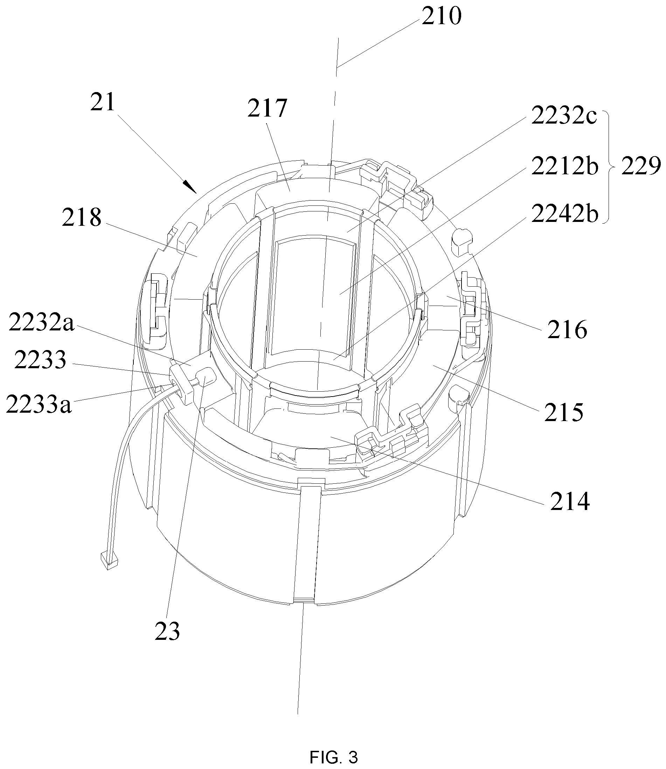

The electric motor 20 includes a stator 21 and a rotor 22. As shown in FIGS. 2 and 3, the stator 21 has a stator support ring 211 and six stator teeth 212. The stator 21 further has a first phase coil, a second phase coil, and a third phase coil. More specifically, the stator 21 has a first coil 213, a second coil 214, a third coil 215, a fourth coil 216, a fifth coil 217, and a sixth coil 218. The first phase coil includes any two of the first coil 213 to the sixth coil 218. The two coils of the first phase coil are connected in series to each other. The second phase coil includes any two of the first coil 213 to the sixth coil 218 that are different from the first phase coil. The two coils of the second phase coil are connected in series to each other. The third phase coil includes the two of the first coil 213 to the sixth coil 218 that are different from the first phase coil and the second phase coil. The two coils of the third phase coil are connected in series to each other.

The stator support ring 211 has an annular shape (for example, a cylindrical shape with two open ends). The six stator teeth 212 are arranged at equal intervals (for example, intervals of 60 degrees) from each other along the circumferential direction of the stator support ring 211 on the inner circumferential surface of the stator support ring 211. Each stator tooth 212 is configured to protrude toward the central axis 210 of the stator support ring 211 (that is, along the radial direction of the stator support ring 211) on the inner circumferential surface of the stator support ring 211. It is to be noted that the central axis 210 is coaxial with a rotary shaft of the rotor 22. That is, the central axis 210 is coaxial with a rotating shaft 221.

Each stator tooth 212 has a stator tooth body and a stator tooth tip portion. The stator tooth body is configured to protrude toward the central axis 210 of the stator support ring 211 on the inner circumferential surface of the stator support ring 211. The stator tooth tip portion is provided at an end portion of the stator tooth body protruding toward the central axis 210. The area of a cross section of the stator tooth tip portion perpendicular to the preceding radial direction is larger than the area of a cross-section of the stator tooth body perpendicular to the preceding radial direction. That is, the stator tooth tip portion is configured to be in a flange shape relative to the stator tooth body.

Each of the first coil 213 to the sixth coil 218 is disposed on any one of the stator teeth 212. In an example, each of the first coil 213 to the sixth coil 218 is wound around the stator tooth body in a respective one of the stator teeth 212.

In this example, the first phase coil, the second phase coil, and the third phase coil are connected to each other to form, for example, a delta connection. That is, a first end of the first phase coil is connected to a first end of the second phase coil and is connected to a motor driver circuit in a controller. For example, a U-phase drive current is supplied from the motor driver circuit to the first end of the first phase coil. A second end of the first phase coil is connected to a first end of the third phase coil and is connected to the motor driver circuit. For example, a V-phase drive current is supplied from the motor driver circuit to the second end of the first phase coil. A second end of the second phase coil is connected to a second end of the third phase coil and is connected to the motor driver circuit. For example, a W-phase drive current is supplied from the motor driver circuit to the second end of the second phase coil.

In this example, for example, the first coil 213 and the fourth coil 216 are connected in series to each other. The first phase coil includes the first coil 213 and the fourth coil 216. Additionally, for example, the second coil 214 and the fifth coil 217 are connected in series to each other. The second phase coil includes the second coil 214 and the fifth coil 217. Additionally, for example, the third coil 215 and the sixth coil 218 are connected in series to each other. The third phase coil includes the third coil 215 and the sixth coil 218.

The first phase coil, the second phase coil, and the third phase coil may be connected to each other by using a connection method different from the delta connection (for example, a star connection).

The rotor 22 is a so-called permanent magnet rotor 22 having an internally mounted permanent magnet. The rotor 22 rotates in response to a supply of power from the controller to the stator 21. It is to be noted that the supply of power to the stator 21 means that at least one of the preceding U-phase drive current, V-phase drive current, or W-phase drive current is supplied to the stator 21.

The rotor 22 is provided with the rotating shaft 221. The rotating shaft 221 rotates integrally with the rotor 22. The rotating shaft 221 is linked to a driving mechanism. A rotational driving force of the rotor 22 is transmitted to the driving mechanism via the rotating shaft 221. The rotating shaft 221 is the motor shaft.

The six stator teeth 212 have the same structure. A temperature sensor 23 is disposed on one of the six stator teeth 212. In this example, for example, the temperature sensor 23 is disposed on the stator tooth 212 wound with the first coil 213.

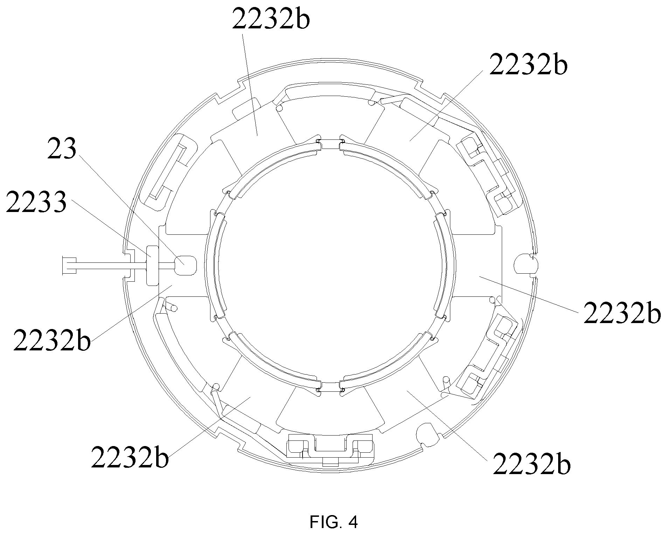

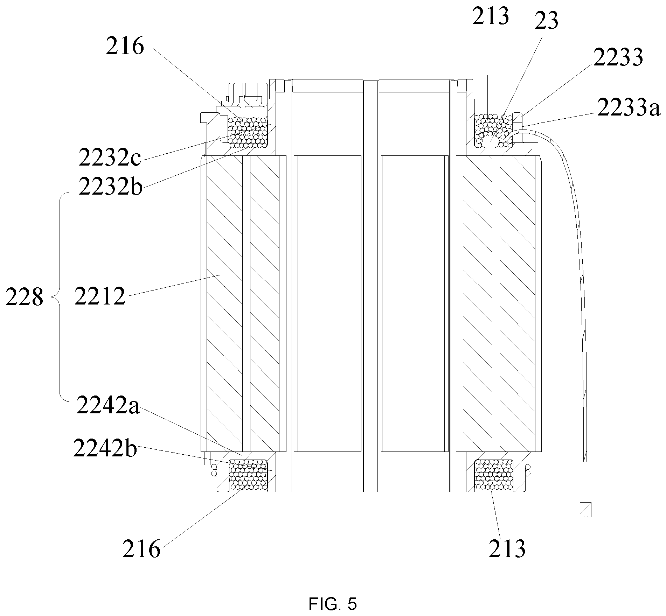

As shown in FIGS. 4 and 5, the temperature sensor 23 is disposed on the stator tooth body of the stator tooth 212. When the electric motor 20 is viewed from the front, that is, the electric motor 20 is viewed from the side provided with the driving mechanism along the direction of the central axis 210, the entire temperature sensor 23 completely coincides with the first coil 213. That is, the entire the temperature sensor 23 is covered by the first coil 213.

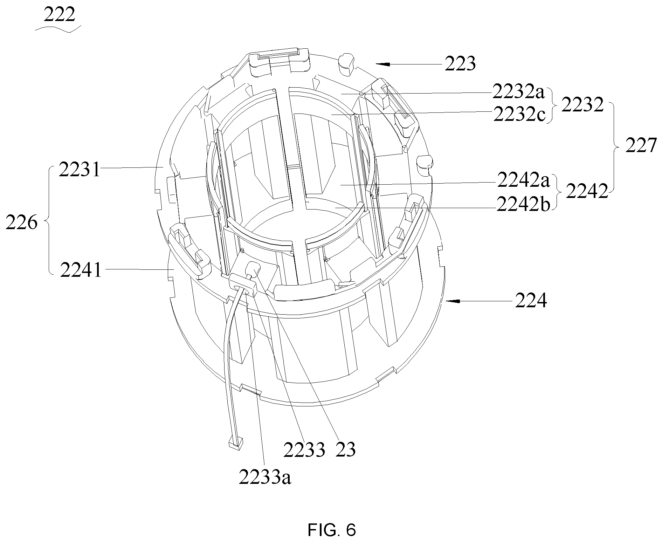

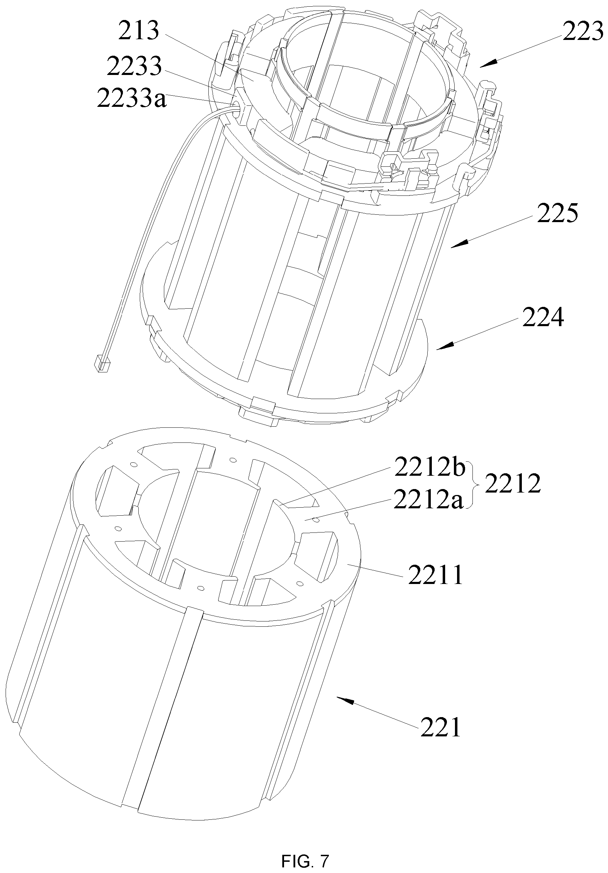

As shown in FIGS. 6 and 7, the stator 21 in this example has a stator lamination 221 and an insulating end cover 222. The insulating end cover 222 includes a first insulating end cover 223 disposed at a first end of the stator lamination 221 and a second insulating end cover 224 disposed at a second end of the stator lamination 221. The stator support ring 211 and the six stator teeth 212 are formed by sequentially combining the first insulating end cover 223, the stator lamination 221, and the second insulating end cover 224.

The stator lamination 221 includes a magnetic body. The stator lamination 221 has a support core 2211 and six core teeth 2212. The support core 2211 is part of the stator support ring 211. A core tooth 2212 is part of the stator tooth 212. The support core 2211 has an annular shape (for example, a cylindrical shape with two open ends). The six core teeth 2212 are arranged at equal intervals (for example, intervals of 60 degrees) from each other along the circumferential direction of the support core 2211 on the inner circumferential surface of the support core 2211. Each core tooth 2212 is configured to protrude toward the central axis 210 (that is, the preceding central axis 210) of the support core 2211 on the inner circumferential surface of the support core 2211. Each core tooth 2212 has a core tooth body 2212a and a core tooth tip portion 2212b. The core tooth body 2212a is part of the stator tooth body. The core tooth tip portion 2212b is part of the stator tooth tip portion.

The first insulating end cover 223 has a first end cover body 2231 and six first wound teeth 2232. The first end cover body 2231 is part of the stator support ring 211. A first wound tooth 2232 is part of the stator tooth 212. The first end cover body 2231 has an annular shape (for example, a cylindrical shape with two open ends). The six first wound teeth 2232 are arranged at equal intervals (for example, intervals of 60 degrees) from each other along the circumferential direction of the first end cover body 2231 on the inner circumferential surface of the first end cover body 2231. Each first wound tooth 2232 is configured to protrude toward the central axis 210 (that is, the preceding central axis 210) of the first end cover body 2231 on the inner circumferential surface of the first end cover body 2231. Each first wound tooth 2232 has a first tooth body 2232a and a first tooth tip portion 2232c. The first tooth body 2232a is wound with any corresponding one of the first coil 213 to the sixth coil 218. The first tooth tip portion 2232c is part of the stator tooth tip portion.

The second insulating end cover 224 has a second end cover body 2241 and six second wound teeth 2242. The second end cover body 2241 is part of the stator support ring 211. A second wound tooth 2242 is part of the stator tooth 212. The second end cover body 2241 has an annular shape (for example, a ring shape). The six second wound teeth 2242 are arranged at equal intervals (for example, intervals of 60 degrees) from each other along the circumferential direction of the second end cover body 2241 on the inner circumferential surface of the second end cover body 2241. Each second wound tooth 2242 is configured to protrude toward the central axis 210 (that is, the preceding central axis 210) of the second end cover body 2241 on the inner circumferential surface of the second end cover body 2241. Each second wound tooth 2242 has a second tooth body 2242a and a second tooth tip portion 2242b. The second tooth body 2242a is part of the stator tooth body. The second tooth tip portion 2242b is part of the stator tooth tip portion.

In the stator 21, one stator tooth 212 is formed by combining one core tooth 2212, one first wound tooth 2232 corresponding to the core tooth 2212, and one second wound tooth 2242 corresponding to the core tooth 2212.

In this example, the first insulating end cover 223 and the second insulating end cover 224 are connected as a whole through a connection portion 225.

In this example, the temperature sensor 23 is disposed on one of the six first wound teeth 2232. In other examples, the temperature sensor 23 may be disposed on one of the six second wound teeth 2242. Specifically, the temperature sensor 23 is placed on a first tooth surface 2232b. The first tooth surface 2232b is a plane substantially perpendicular to the rotating shaft 221 of the electric motor 20. For example, a surface of the first tooth body 2232a or a surface of the second tooth body 2242a substantially perpendicular to the rotating shaft 221 of the electric motor 20 is configured as the preceding first tooth surface 2232b.

In some examples, six first tooth surfaces 2232b are on the same horizontal plane. In some examples, the six first tooth surfaces 2232b are on different horizontal planes, and the multiple different horizontal planes are configured to be substantially parallel to each other. In some examples, the first tooth surface 2232b is a plane substantially perpendicular to the rotating shaft 221. In some examples, the first tooth surface 2232b may be a plane not perpendicular to the rotating shaft 221.

In some examples, a fixing coating is applied between the temperature sensor 23 and the first tooth surface 2232b to fix the temperature sensor 23 on the first tooth surface 2232b so that the temperature sensor is fixed more firmly. For example, the fixing coating may be a fixing adhesive. In other examples, the temperature sensor 23 may be fixed on the first tooth surface 2232b through a tape.

In some examples, the temperature sensor 23 directly abuts against the coil wound on a wound tooth 227. The temperature sensor 23 is wrapped and fixed through the coil, and an additional temperature sensor fixing structure is not required.

Furthermore, the insulating end cover 222 further has an enclosure portion 2233. The enclosure portion 2233 is disposed on the peripheral side of the wound tooth 227, that is, the enclosure portion 2233 is disposed opposite to the stator tooth tip portion. An avoidance portion 2233a is provided on at least the enclosure portion 2233 corresponding to the wound tooth 227 on which the temperature sensor 23 is disposed so that a lead-out wire of the temperature sensor 23 is avoided. In some examples, the avoidance portion 2233a is configured as a hole-like structure on the enclosure portion 2233. In an example, the avoidance portion 2233a may be a slot or another structure capable of avoiding the lead-out wire.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising:
an electric motor (20) comprising a stator (21) and a rotor (22);
a transmission mechanism (30) configured to transmit a drive force generated by rotation of the rotor (22) to drive a working component to work; and
a temperature sensor (23) configured to detect a temperature of the electric motor (20);
wherein the stator (21) comprises a stator lamination (221), an insulating end cover (222) disposed at two ends of the stator lamination (221), and coils wound on the stator lamination (221) and the insulating end cover (222), the insulating end cover (222) comprises an end cover body (226) and a plurality of wound teeth (227), the temperature sensor (23) is placed on a first tooth surface (2232b) of any wound tooth (227) among the plurality of wound teeth (227), and the first tooth surface (2232b) is a plane substantially perpendicular to a rotating shaft (221) of the rotor (22).

2. The power tool according to claim 1, wherein each of the plurality of wound teeth (227) comprises a tooth body (228) and a tooth tip portion (229), the tooth tip portion (229) is in a flange shape relative to the tooth body (228), and a surface of the tooth body (228) substantially perpendicular to the rotating shaft (221) is configured as the first tooth surface (2232b).

3. The power tool according to claim 1, wherein the insulating end cover (222) further comprises an enclosure portion (2233), and the enclosure portion (2233) is provided with an avoidance portion (2233a) to avoid a lead-out wire of the temperature sensor (23).

4. The power tool according to claim 3, wherein the avoidance portion (2233a) is configured as a hole-like structure on the enclosure portion (2233).

5. The power tool according to claim 1, wherein a fixing coating is applied between the temperature sensor (23) and the first tooth surface (2232b) to fix the temperature sensor (23) on the first tooth surface (2232b).

6. The power tool according to claim 5, wherein the fixing coating comprises a fixing adhesive.

7. The power tool according to claim 1, wherein the temperature sensor (23) directly abuts against a coil wound on the wound tooth (227).

8. The power tool according to claim 1, wherein the plurality of wound teeth (227) have the same structure.

9. An electric motor, comprising:
a stator (21) and a rotor (22);
wherein the stator (21) comprises a stator lamination (221), an insulating end cover (222) disposed at two ends of the stator lamination (221), and coils wound on the stator lamination (221) and the insulating end cover (222);
the insulating end cover (222) comprises an end cover body (226) and a plurality of wound teeth (227); and
a temperature sensor (23) configured to be placed on a first tooth surface (2232b) of any wound tooth (227) among the plurality of wound teeth (227);
wherein a first tooth surface (2232b) of each of the plurality of wound teeth (227) is configured as a plane.

10. The electric motor according to claim 9, wherein the first tooth surface (2232b) is a plane.

11. The electric motor according to claim 9, wherein each of the plurality of wound teeth (227) comprises a tooth body (228) and a tooth tip portion (229), the tooth tip portion (229) is in a flange shape relative to the tooth body (228), and a surface of the tooth body (228) substantially perpendicular to a rotating shaft (221) is configured as the first tooth surface (2232b).

12. The electric motor according to claim 9, wherein the insulating end cover (222) further comprises an enclosure portion (2233), and the enclosure portion (2233) is provided with an avoidance portion (2233a) to avoid a lead-out wire of the temperature sensor (23).

13. The electric motor according to claim 12, wherein the avoidance portion (2233a) is configured as a hole-like structure on the enclosure portion (2233).

14. The electric motor according to claim 9, wherein a fixing coating is applied between the temperature sensor (23) and the first tooth surface (2232b) to fix the temperature sensor (23) on the first tooth surface (2232b).

15. The electric motor according to claim 14, wherein the fixing coating comprises a fixing adhesive.
